# EUROPEAN PATENT SPECIFICATION

(11) **EP 0 477 785 B1**
(45) Date of publication and mention of the grant of the patent: **19.11.1997**
(21) Application number: 91115985.3
(22) Date of filing: 20.09.1991
(51) Int. Cl.: C03B 23/03, C03B 23/023

(54) **A sheet for glass shaping mould**
Auskleidung für eine Glasscheibenbiegeform
Recouvrement pour un moule de bombage d'une feuille de verre

(30) Priority: 26.09.1990 JP 101587/90 U
(43) Date of publication of application: 01.04.1992
(73) Proprietor: NIPPON SEISEN CO., LTD., Osaka-shi Osaka 541 (JP); CENTRAL GLASS COMPANY, LIMITED, Ube-shi, Yamaguchi-ken (JP)
(72) Inventor: Tominaga, Seiji, Chuo-ku Osaka-shi Osaka-fu (JP); Murakami, Masaki, Chuo-ku Osaka-shi Osaka-fu (JP); Takagi, Kazuyoshi, Matsuzaka-shi, Mie-ken (JP)
(74) Representative: Türk, Gille, Hrabal, Leifert

(56) References cited:
- EP-A- 0 312 439
- EP-A- 0 312 441
- EP-A- 0 387 111
- EP-A- 0 388 249
- EP-A- 0 415 826
- EP-A- 0 438 342
- EP-A- 0 499 522
- EP-A- 0 502 756
- EP-A- 0 521 741
- DE-A- 1 471 933
- DE-C- 3 908 644
- FR-A- 2 606 398
- GB-A- 2 168 339
- US-A- 3 328 151

## Description

The present invention relates to a cover sheet which is used on a mould for shaping a glass plate softened by heating into a desired curved surface.

In the recent automotive industry, from the viewpoint of reducing the aerodynamic resistance of the carbody while running and saving the fuel expenses, its profile design is one of the essential points. In this regard, various curved glass plate products are demanded in the windshield, and rear and side windowpanes, as well as glass plates in other fields than the automotive industry.

The state of art, namely the EP-A-312439 discloses a cover sheet, which is formed by cords comprising metal fibers, for example a stainless steel fiber, of a thickness being less than 50 µm. Hereby a two-folded yarn composed of two single yarns is used as the cord. This cover sheet is a textile that interweaves woofs and warps, whereby a connecting point of woofs and warps is fixed so as to restrain the transformation of stitches. This document is not disclosing something about the knitting, particulary about the knitting pitch, namely about the arrangement of the number of knitting needles in a certain interval.

Hitherto, in manufacture of products of such curved cover shapes, generally a flat glass plate is once heated and softened, and shaped, and it is curved, for example, by the own weight of the glass plate itself in the sag-bend system, or curved by using a shaping tool in the press system.

In the latter method, for example as disclosed in the Japanese Laid-open Utility Model No. 64-10042, from the viewpoint of enhancing the surface quality of product after shaping, a mould having a fine metallic felt material glued on its surface is used.

Although such felt material is rich in flexibility, a specific thickness, for example, 5 mm or more is needed because it is a laminate, and it was not satisfactory in the expansion and contraction properties. Accordingly, when the moulding surface is formed, for example, in a spherical shape, it is difficult to glue the felt material uniformly and without allowing crease along the contour of the spherical shape.

Besides, when the degree of curvature of molding surface is relatively small, if pulled more than necessary to prevent creasing, the thickness of the felt varies, which makes it difficult to match the shape. Or the felt material may be broken and the working efficiency is lowered. Still more, in the mould using felt having creases or changed in thickness, the obtained glass product may have transparency distortion or reflection distortion, and the product quality is spoiled significantly.

On the other hand, as disclosed in the Japanese Laid-open Utility Model No. 58-128933, it has been attempted to replace the felt material with woven cloth of glass or metal. Such woven cloth is, however, very small in the expansion and contraction ability in the textile direction. Therefore, the above problems are not solved by these methods.

It is hence a primary object of the invention to present a cover sheet for a glass shaping mould which is easy to mount on the mould, greatly enhances the product quality, and is capable of shaping glass plate of high degree of curvature.

According to the present invention, a cover sheet for a glass shaping mold, which is provided on a mold surface of a mould for shaping a glass plate, comprises a knitted fabric formed by knitting two-folded yarns made by twisting two textile yarns, whereby the twisting directions of the textile yarns are reverse to the twisting directions of the two-folded yarns, wherein at least one of two textile yarns includes stainless steel fibers with a diameter of 50 µm or less, and the knitted fabric has a knitting pitch of 10 to 30 knitting needles arranged per 25,4 mm.

The two-folded yarns may consist of a stainless steel textile yarn made of stainless steel fibers and a nonmetallic textile yarn made of heat resistant nonmetallic fibers. Also, the two-folded yarns may consist of two stainless steel textile yarns made of stainless steel fibers. Further, at least one of the two textile yarns may be made by mixture of stainless steel fibers and heat resistant nonmetallic fibers. And, the nonmetallic fiber may be selected from carbon fiber, glass fiber and aromatic polyamide fiber.

As the textile yarns for forming two-folded yarns, various compositions may be used in the invention: for example,
(1) stainless steel filament yarns bundling a plurality of long stainless steel fibers only,
(2) stainless steel spun yarns aligning relatively short stainless steel fibers parallel and bundling and twisting into a continuous form, and
(3) mixed filament yarns or mixed spun yarns composed heat resistant nonmetallic fibers such as carbon fibers, glass fibers and aromatic polyamide fibers, with stainless steel fibers.

As two-folded yarns, textile yarn including stainless steel fibers, that is, above mentioned stainless steel yarn or mixed yarn are used at least in one of the two textile yarns. The other textile yarn may be, aside from stainless steel yarn or mixed yarn, filament yarn made of nonmetallic fiber, or nonmetallic spun yarn. Among these compositions mentioned above, in particular, in the case of a knitted fabric composed of two-folded yarns made of only stainless steel fibers, the strength is excellent and durability is enhanced, and it is easier to mount on the mould.

In addition, in case of forming two-folded yarns with stainless steel yarn and nonmetallic yarn or in the case of forming two-folded yarns with mixed textile yarns, the following benefits are brought about. That is, even if various ceramic pastes lower in softening point than the glass are printed on the surface of glass plate, parting from the cover sheet is secure and stable, and damage of glass surface is prevented while maintaining a necessary strength of the cover sheet. Moreover, the consumption of expensive stainless steel fiber is saved, and the cost may be reduced. In such case, meanwhile, by varying the mixing ratio of stainless steel fiber and nonmetallic fiber, it is possible to control the properties such as mechanical properties and thermal properties. And glass plates of high quality may be formed at high efficiency by setting these properties depending on the glass shaping conditions.

When using the mixed yarn, it is desired to set the mixing rate of stainless steel fibers at 20% or more by volume. As nonmetallic fibers, those nearly same in diameter as the stainless steel fibers are preferably used.

The diameter of the stainless steel fiber should not be more than 50 µm. If exceeding 50 µm, knitting marks may be transferred on the glass plate when shaping the glass. Yet, along with the increase of diameter, the transfer patterns tend to be larger, and the working efficiency of manufacturing cover sheets for a glass shaping mould deteriorates. Therefore, more preferably the diameter should be about 4 to 20 µm. On the other hand, by using such the stainless steel fibers, the ability for keeping the shape of loop in the knitted fabric is more improved. As the result, it is possible to produce the cover sheet which is superior in the expansion and contraction ability.

When using filament yarns, incidentally, it is desired to form the textile yarns by a bundle of about 300 to 100000 fibers, and anyway by using multiple and fine fibers, it may add to flexibility, pliability and strength of the sheet for the mould.

The cover sheet for a glass shaping mould is made of a knitted fabric formed by knitting two-folded yarns at a knitting pitch of 10 to 30 knitting needles arranged per 25,4 mm (10 to 30 gauges).

The gauge count herein refers to the number of knitting needles aligned in 25,4 mm (one inch), which may be checked, for example, by the number of loop rows existing in the knitted fabric. For example, the knitting pitch of 10 gauges means the coarseness of stitches of the knitted fabric knitted by needles arranged at an interval of 2,54 mm (1/10 inch). And the smaller the gauge count, the coarser becomes the knitting. When the gauge count is less than 10, the transfer pattern on the glass surface becomes large, and exceeding 30, the knitting job performance is extremely lowered, and expansion and contraction performance is impeded. Preferably, when using 20 count two-folded yarns, for example, the pitch should be set at 10 to 14 gauges, with 40 count two-folded yarns, 10 to 18 gauges, or with 60 count two-folded yarns, 10 to 30 gauges, whereby the thickness of yarn is generally expressed by the count. And in the case of cotton yarn, the thickness of the cotton yarn having a length of 840 yards per weight of one pound is called 1 count (591-tex of cotton yarn), and if the length is 840 x 2 yards, it is expressed us 2 counts. In this specification, considering the mass of the textile material, when the ratio K of the mass M2 of the textile yarn to the mass M1 of cotton yarn is M2/M1, the thickness of the textile yarn having a length of 840 yards per M2/M1 pound is expressed as 1 count. Therefore, the 20-count textile yarn in this specification is equal to the 20-count cotton yarn nearly in thickness. The 20-count two-folded yarns are formed by twisting two 20-count textile yarns. The reason of using two-folded yarns in this invention is as follows. That is, by inverting the twisting direction of each textile yarn (down twisting) and the twisting direction of two-folded yarns (up twisting), twisting in knitting operation or twisting of the yarn itself is prevented, and a uniform knitted fabric will be formed.

An embodiment of the present invention will now be described by way of example, referring to the attached drawings, in which;
Fig. 1 is a plan view showing an example of a cover sheet for a glass shaping mould of the invention,
Fig. 2 is a diagram for explaining two-folded yarns used therein,
Fig. 3 is a partially magnified view of the knitted fabric for explaining the overlapping portion,
Fig. 4 is an exploded perspective view for explaining an example of use of a cover sheet for a glass shaping mould,
Fig. 5 is a plan view showing other embodiment of knitted fabric,
Fig. 6 (a), (b) are sectional views for explaining a cover sheet for a glass shaping mould in laminate structure, and
Fig. 7 is a perspective view showing other embodiment of laminate structure.

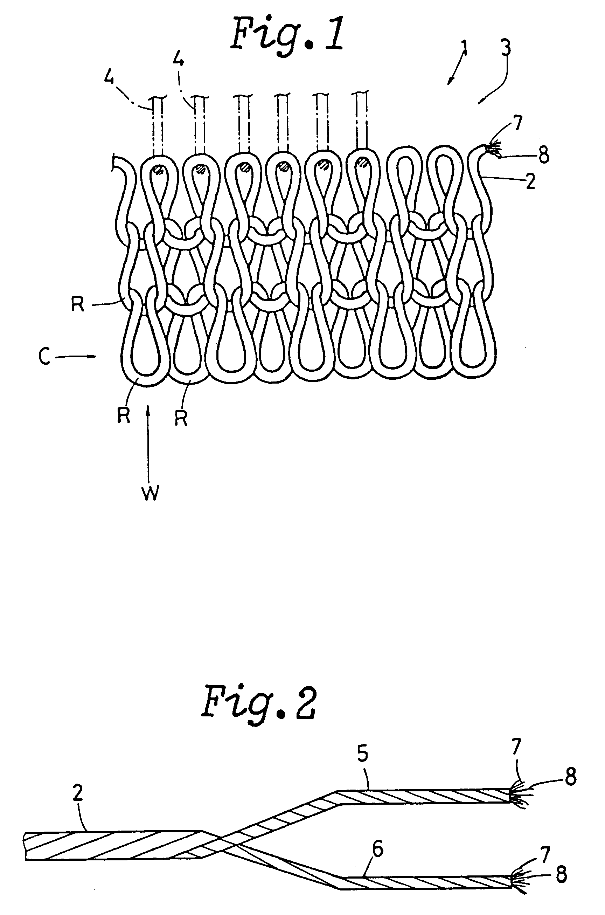

Fig. 1 is a plan view showing a magnified view of a cover sheet for a glass shaping mould of the invention.

As shown in Fig. 1, the sheet 1 comprises a knitted fabric 3 by knitting two-folded yarns 2. Methods of knitting may include, among others, plain stitch, rib stitch and pearl stitch. Fig. 1 shows a rib stitch knitted fabric 3, in which face stitches and back stitches are alternately arranged in each course C which is the rows of loops R formed in the lateral direction. It is the pearl stitch that alternately arranges the face stitches and back stitches in the wales W orthogonal to the course C, that is, in the rows of loops R arranged in the directions of the knitting needles 4. The rib stitch is excellent in elongation in the direction of course C, while the pearl stitch has a directivity with an excellent elongation in the wale W direction. These knitting are used for forming glass plate relatively small in the degree of curvature. On the other hand, the plain stitch having the face stitches and back stitches of the loops R arranged on one side is excellent in anisotropy of elongation and is preferable for shaping products large in degree of curvature.

The knitted fabric 3 has a knitting pitch of 10 to 30 knitting needles 4 arranged per 25,4 mm (one inch) as mentioned above. Besides, as shown in Fig. 2, two textile yarns 5, 6 forming the two-folded yarns 2 are, in this embodiment, made of mixed textile yarns twisting stainless steel fiber 7 and heat resistant nonmetallic fiber 8, and the twisting directions of textile yarns 5, 6 are reverse to the twisting direction of the two-folded yarns 2. With regard to the twisting number of the two-folded yarns 2, the twisting number is preferably set to be 2 to 20 per 25,4 mm (one inch), more preferably 2 to 10.

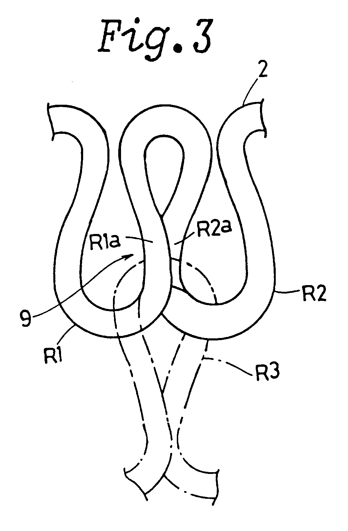

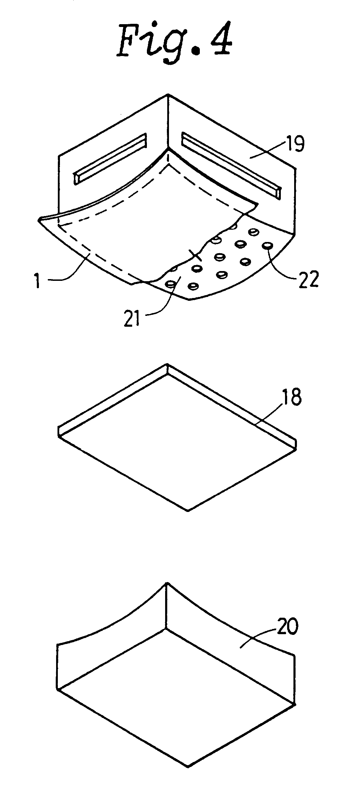

Fig. 4 shows an example of use of the cover sheet 1 for a glass shaping mould. In this figure, the sheet 1 is disposed beside a moulding surface 21 of the upper mould pattern 19 for shaping the curved glass plate, with a proper tension to avoid crease. Between the upper mould pattern 19 mounting the sheet 1 and the lower mould pattern 20, a heated flat glass plate 18 is pressed, so that the glass plate 18 is shaped to a curvature of high precision along the moulding surface 21. The moulding surface 21 has suction holes 22 for sucking and holding the shaped glass plate 18 pierced at proper intervals in a diameter of, for example, 2 to 7 mm. The suction holes 22 are connected to external air suction means (not shown), and by changing over suction and discharge, setting, forming, discharging and other processing of the glass plate 18 are done. In this embodiment, as shown in Fig. 3, the knitted fabric 3 forms an overlapping portion 9 where a part R1a of one loop R1 and a part R2a of the loop R2 adjacent in the course C direction are overlapped to each other by using two-folded yarns 2 with the diameter of 1.5 times of the value usually set from the knitting pitch. In this overlapping portion 9, meanwhile, since the loop R3 adjacent in the wale W direction also overlaps, at least three sets of two-folded yarns are duplicated in the overlapping portion 9. As a result, the thickness of the knitted fabric 3 increases, and transfer mark of suction holes 22 on the glass surface is suppressed.

Besides, by the increase of the thickness, the air suction action from the suction holes 22 may be dispersed uniformly, and the holding force on the glass plate 18 is raised.

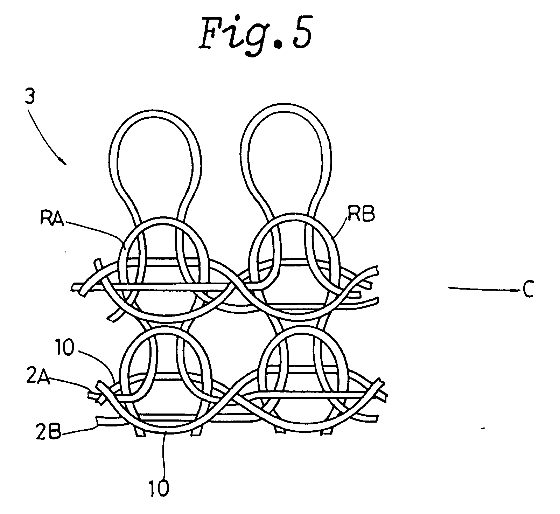

In the plain stitch, meanwhile, as shown in Fig. 5, it is desired to form a so-called inlet float plain stitch structure, wherein, in order to form the base of the knitted fabric 3, two sets of two-folded yarns 2A, 2B are knitted so as to arrange the loops RA of the yarn 2A and the loops RB of the yarn 2B mutually in the direction of course C, and two sets of subsidiary two-folded yarns 10, 10 are knitted into the base so as to cross the loops RA,RB in the direction of course C. Thereby overlapping portions 9 where at least three sets of two-folded yarns are duplicated are formed, and the thickness of the fabric 3 is increased. In this case, the subsidiary two-folded yarns 10 should be preferably formed in the same composition as the two-folded yarns 2, but may be also formed by using nonmetallic fibers alone, for example. Moreover, the thickness may be increased by the laminate structure by sewing together a plurality of knitted fabrics into a single piece. In such a case, at least at the outside contacting with the glass plate 18, the knitted fabric 3 of the invention is used.

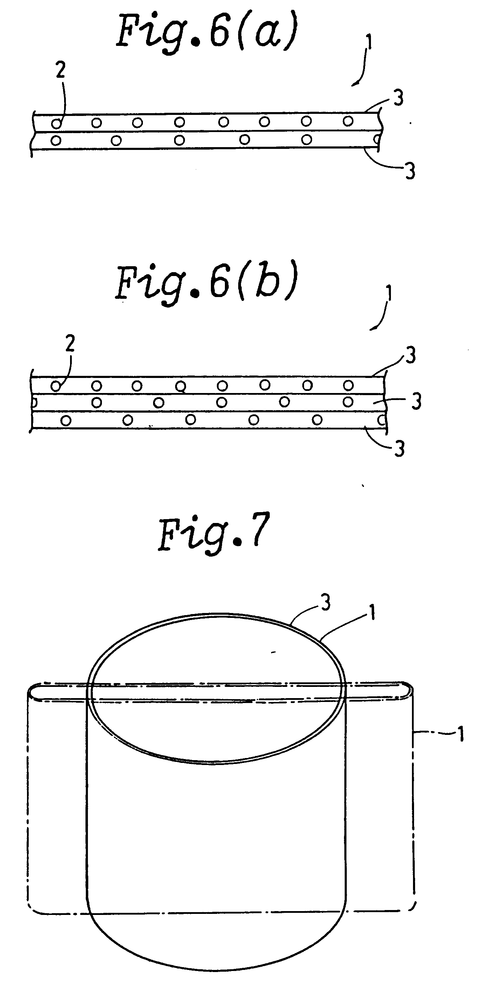

In the laminate structure, incidentally, the knitting pitch of the knitted fabric may differ in every layer, and the knitting pitch may be changed form outside to inside, for example, as fine-coarse, fine-coarse-fine, or fine-coarse-coarse, so that the pressure loss due to suction holes 22 may be prevented. An example of fine-coarse structure is shown in Fig. 6 (a), and an example of fine-coarse-coarse composition in Fig. 6 (b). Or, as shown in Fig. 7, by knitting the knitted fabric 3 in a cylindrical form and using it by plaiting flat, two layers may be formed into a single cover sheet 1 for a glass shaping mould without having to sew together.

Still more, in order to compare the durability of the sheet 1 of the invention, a knitted fabric containing stainless steel fibers in a structure as shown in Fig. 1, and a knitted fabric made of only glass fibers in same diameter as stainless steel fibers in a structure as shown in Fig. 1 were experimentally manufactured, and were presented for the glass shaping test. As a result, the sheet 1 of the embodiment, when containing stainless steel fibers by 20% (by volume) or more, was confirmed to have a durability three times or more as compared with the reference examples made of glass fibers only.

As mentioned above, the sheet of the invention is composed of the knitted fabric which is knitted by two-folded yarns including fine stainless steel fibers. Therefore, the sheet displays the superior expansion and contraction ability in all direction while having the high flexibility and the strength. As the result, it is possible to set easily and uniformly on the mould having a curved moulding surface with a proper tension while preventing the creasing and changing of the thickness.

In addition, since the sheet is knitted at the specific knitting pitch, the transfer mark on the glass surface is decreased into the tolerance limit where the mark can be nearly ignored, whereby enhancing the quality of the glass products.

## Claims

1. A cover sheet (1) for a glass shaping mould, which is provided on a mould surface (21) of a mould for shaping a glass plate (18), comprising a knitted fabric (3) formed by knitting two-folded yarns (2) made by twisting two textile yarns (5,6), whereby the twisting directions of the textile yarns (5,6) are reverse to the twisting directions of the two-folded yarns (2), wherein at least one of two textile yarns (5,6) includes stainless steel fibers (7) with a diameter of 50 µm or less, and the knitted fabric (3) has a knitting pitch of 10 to 30 knitting needles (4) arranged per 25,4 mm.

2. A cover sheet for a glass shaping mould of claim 1, wherein the two-folded yarns (2) consist of a stainless steel textile yarn (5) made of stainless steel fibers (7), and a nonmetallic textile yarn (6) made of heat resistant nonmetallic fibers (8).

3. A cover sheet for a glass shaping mould of claim 1, wherein the two-folded yarns (2) consist of two stainless steel textile yarns (5, 6) made of stainless steel fibers (7).

4. A cover sheet for a glass shaping mould of claim 1, wherein at least one of the two textile yarns (5, 6) is made by mixture of stainless steel fibers (7) and heat resistant nonmetallic fibers (8).

5. A cover sheet for a glass shaping mould of claim 2 or 4, wherein the nonmetallic fiber (8) is selected from carbon fiber, glass fiber and aromatic polyamide fiber.

## Patentansprüche

1. Auskleidung (1) für eine Glasbiegeform, welche auf die Oberfläche (21) einer Form für die Ausformung einer Glasplatte (18) aufgebracht wird und die ein Gewirk (3) enthält, welches durch Verzwirnen von zweifädigen Garnen (2) hergestellt wird, die aus zwei verzwirnten Textilgarnen (5, 6) bestehen, wobei die Zwirnrichtung der Textilgarne (5, 6) entgegengesetzt zu der Zwirnrichtung der zweifädigen Garne (2) verläuft, und wobei mindestens eines der beiden Textilgarne (5, 6) rostfreie Stahlfasern (7) mit einem Durchmesser von 50 µm oder weniger enthält und das Gewirk (3) eine Maschenteilung von 10 bis 30 Stricknadeln (4) aufweist, welche jeweils in einem Abstand von 25,4 mm angeordnet sind.

2. Auskleidung nach Anspruch 1,
**dadurch gekennzeichnet**, **daß**
die zweifädigen Garne (2) aus einem Textilgarn (5) aus rostfreien Stahlfasern (7) und einem nichtmetallischen Textilgarn (6) bestehen, das aus wärmefesten nichtmetallischen Fasern (8) hergestellt ist.

3. Auskleidung nach Anspruch 1,
**dadurch gekennzeichnet**, **daß**
die zweifädigen Garne (2) aus zwei Textilgarnen (5, 6) aus rostfreiem Stahl bestehen, welche aus rostfreien Stahlfasern (7) hergestellt sind.

4. Auskleidung nach Anspruch 1,
**dadurch gekennzeichnet**, **daß**
mindestens eines der beiden Textilgarne (5, 6) aus einem Gemisch aus rostfreien Stahlfasern (7) und wärmefesten nichtmetallischen Fasern (8) hergestellt ist.

5. Auskleidung nach einem der Ansprüche 2 oder 4,
**dadurch gekennzeichnet**, **daß**
die nichtmetallische Faser (8) aus der Gruppe ausgewählt wird, welche Kohlenstoffasern, Glasfasern und aromatische Polyamidfasern umfaßt.

## Revendications

1. Feuille de recouvrement (1) pour un moule de formage du verre qui est prévue sur une surface de moulage (21) d'un moule destiné à former une plaque de verre (18), comprenant un tissu tricoté (3) formé en tricotant des fils doublés (2) fabriqués en tordant deux fils textiles (5, 6), les sens de torsion des fils textiles (5, 6) étant inverses des sens de torsion des fils doublés (2), dans lequel au moins un des deux fils textiles (5, 6) comprend des fibres d'acier inoxydable (7) d'un diamètre de 50 µm ou moins, et le tissu tricoté (3) possède un pas de tricotage de 10 à 30 aiguilles de tricotage (4) agencées par longueur de 25,4 mm.

2. Feuille de recouvrement pour un moule de formage de verre selon la revendication 1, dans laquelle les fils doublés (2) sont composés d'un fil textile (5) en acier inoxydable fait de fibres d'acier inoxydable (7) et d'un fil textile non métallique (6) fait de fibres non métalliques (8) résistantes à la chaleur.

3. Feuille de recouvrement pour un moule de formage du verre selon la revendication 1, dans laquelle les fils doublés (2) sont composés de deux fils textiles (5, 6) en acier inoxydable faits de fibres d'acier inoxydable (7).

4. Feuille de recouvrement pour un moule de formage de verre selon la revendication 1, dans laquelle au moins un des deux fils textiles (5, 6) est fait par mélange de fibres d'acier inoxydable (7) et de fibres non métalliques (8) résistantes à la chaleur.

5. Feuille de recouvrement pour un moule de formage du verre selon la revendication 2 ou 4, dans laquelle la fibre non métallique (8) est choisie parmi la fibre de carbone, la fibre de verre et la fibre de polyamide aromatique.
